# EUROPEAN PATENT SPECIFICATION

(11) **EP 3 375 667 B1**
(45) Date of publication and mention of the grant of the patent: **09.10.2019**
(21) Application number: 18161295.3
(22) Date of filing: 12.03.2018
(51) Int. Cl.: B60R 9/06, B60R 9/10

(54) **BICYCLE RACK**
FAHRRADSTÄNDER
PORTE-VÉLO

(30) Priority: 13.03.2017 GB 201703997
(43) Date of publication of application: 19.09.2018
(73) Proprietor: Auxtail Limited, Milton Keynes, Buckinghamshire MK10 7BG (GB)
(72) Inventor: Broadbent, Michael Craig, Milton Keynes, Buckinghamshire MK10 7BG (GB)
(74) Representative: Turner, Richard Charles

(56) References cited:
- WO-A1-2010/141944
- US-A- 5 570 825
- US-A- 5 833 074
- US-A1- 2008 164 292
- US-A1- 2009 236 382
- US-A1- 2016 068 111

## Description

This invention relates to an apparatus for connecting to a motor vehicle and for carrying one or more bicycles.

A bicycle rack is a device carried by a vehicle that is used to carry one or more bicycles on the exterior of the vehicle in a safe manner. Platform style bicycle racks are located behind a vehicle and provide a low loading position that is easier to access than other options and with less risk of damage to the vehicle. Bicycles can vary in wheel size, wheelbase, frame shapes and sizes and tyre widths which all present problems for bicycle racks. Wheel sizes can vary from 400mm to 740mm. Tyre width can vary from 19mm to 100mm. Wheelbase can vary from 750mm to 1200mm. Some bicycle racks can weigh more than 20kg which is difficult for an average user to lift and manoeuvre.

Most current bicycle racks hold the frame of the bicycle and as a result paint rubbing can occur with frame fixing and the loading of multiple bicycles by this method is further hindered by the need to avoid the first bicycle frame when attaching the second or subsequent bicycles from a single position on the bicycle rack frame. Bike frames with thin walls and deep sections pose difficulty for frame clamping type bike racks. The jaws of the clamp may not securely hold the frame if the sectional area is large, or may overload certain points of the frame causing damage if the frame is thin walled. Existing bicycle racks which hold only the front tyre of a bicycle normally connect to the bicycle at the top near the forks. If the bicycle in question has a front mud guard then this is not possible. Additionally many bicycles have their brake callipers mounted at this position which can be damaged or can damage the bicycle rack when the bicycle is fixed onto the bicycle rack.

United States of America patent application US 2008/0164292 discloses a bicycle carrier for a vehicle including a frame, a crossbar assembly, a wheel tray, and a swing arm pivotally secured to the crossbar assembly. The wheels of the bicycle are positioned in the tray and secured by a tray coupling to restrain lateral movement. Two trays may be secured to the crossbar assembly to each receive a wheel of the bicycle. The swing arm pivots on the crossbar assembly and includes a shoe which engages the bicycle wheel. A shoe coupling secures the bicycle wheel to the swing arm. Two swing arms could be pivotally secured to the crossbar assembly each to engage a bicycle wheel. The frame may include a drawbar for insertion into the receiver of a trailer hitch. Additional crossbar assemblies could be secured to the frame to accommodate multiple bicycles. Other bicycle racks are known from US 2009/236382, US 2016/068111 and US 5,833,074. The document US2009/236382 A1 and also the document US2016/068111 A1 disclose each as well subject-matter according to the preamble of claim 1.

It is therefore an object of the invention to improve upon the known art.

According to the present invention, there is provided apparatus for connecting to a motor vehicle and for carrying one or more bicycles, the apparatus comprising a central frame for connecting to a motor vehicle, a rail connected to the central frame and aligned perpendicular to the central frame, a rear wheel connector connected to the rail at one end thereof and for connecting to a rear wheel of a bicycle, a front wheel stop connected to the rail for bracing against a front wheel of a bicycle, and a front wheel connector rotationally connected to the rail at an opposite end of the rail to the rear wheel connector and for connecting to a front wheel of a bicycle, characterised in that the apparatus further comprises a stop connected to the front wheel connector and for preventing rotation of the front wheel connector beyond a specific point, so that when the front wheel connector is forward of the axis of a front wheel of a bicycle, the front wheel connector is restricted from rotating further outboard by the stop.

Owing to the invention, it is possible to provide a bicycle rack that can be used on a motor vehicle that is both space efficient and mounts one or more bicycles in a manner that is easily adaptable to different sizes of bicycle while also protecting the bicycle and vehicle from any damage. The bicycle rack can be easily connected to a vehicle using the central frame of the bicycle rack and the relatively small number of components of the bicycle rack result in a simple and lightweight construction. The bicycle rack does not need to take up much space in storage and can be constructed small enough to fit into the boot of a vehicle. The stop, which prevents rotation of the front wheel connector beyond a specific point, ensures the safe gripping of the most bicycle types; bicycles with small and large wheels as well as those with mudguards are all held securely in place. The upper clamping point is away from the frame or brake callipers.

Preferably, the bicycle rack further comprises a second rail connected to the central frame and aligned perpendicular to the central frame and parallel and spaced apart from the first rail, a rear wheel connector connected to the second rail at one end thereof and for connecting to a rear wheel of a bicycle, a front wheel stop connected to the second rail for bracing against a front wheel of a bicycle, and a front wheel connector rotationally connected to the second rail at an opposite end of the second rail to the rear wheel connector and for connecting to a front wheel of a bicycle. Preferably, the second rail is connected to the central frame in opposite orientation to the first rail such that one end of the second rail is adjacent to the opposite end of the first rail. The bicycle rack is preferably constructed with two parallel rails that are orientated so that two bicycles can be carried by the bicycle rack with the two bicycles facing in opposite directions. This reduces the space required between the two bicycles and makes for a more compact design of bicycle rack.

Ideally, the front wheel connector mounts a front wheel clamp on one end of the front wheel connector, the front wheel connector rotationally connected to the respective rail at the opposite end to the front wheel clamp. Preferably, the front wheel clamp comprises a hook for looping over a front wheel of a bicycle. Preferably, the front wheel connector and the front wheel clamp are extendable in length and lockable at a plurality of different lengths. The front wheel connector and the clamp are preferably constructed so that their length is adjustable and there is a clamp in the form of a hook located at the free end of the front wheel connector, which allows the front wheel connector (which is rotationally connected to its rail) to be rotated into position onto a front wheel of a bicycle and then have its length adjusted without damaging the bicycle or the vehicle mounting the bicycle rack.

Advantageously, the central frame includes a latching mechanism at one end thereof, the latching mechanism for locking the central frame to a receiver of a vehicle. Preferably, at least part of the latching mechanism is located internally within the central frame and includes a moveable latch that is biased to move and extend out of the central frame. The bicycle rack preferably has a latching mechanism located internally within the central frame of the bicycle rack that includes a biased latch that is biased to move outwards from the interior of the central frame. The central frame can therefore be connected to a receiver at the rear of the vehicle on which the bicycle rack is being mounted. The receiver and the central frame are connected together by the user and the latching mechanism locks the two parts together. This provides a simple and effective way to securely connect the bicycle rack to the vehicle, allowing the user of the bicycle rack to securely mount the bicycle rack on the vehicle without any need to work with complex locking systems. Reference(s) to "embodiment(s)" throughout the description which are not under the scope of the appended claims merely represent possible exemplary executions and are therefore not part of the present invention.

Embodiments of the present invention will now be described, by way of example only, with reference to the accompanying drawings, in which:-
Figure 1 is a rear view of a bicycle rack with a bicycle,
Figure 2 is a top plan view of the bicycle rack,
Figure 3 is a rear view of the bicycle rack in its folded configuration,
Figure 4a is a further rear view of the bicycle rack, showing different bicycle front wheel sizes,
Figure 4b is further rear view of part of the bicycle rack,
Figure 4c is a rear view of part of a second embodiment of the bicycle rack,
Figure 5 is a top view of part of the bicycle rack,
Figure 6 is a side sectional side view of part of the bicycle rack connecting to a motor vehicle,
Figure 7 is a side sectional side view of part of the bicycle rack connected to a motor vehicle,
Figure 8 is a further side sectional view of part of the bicycle rack connecting to a motor vehicle,
Figure 9 is a side view of a vehicle with the bicycle rack attached,
Figure 10 is a side view of the bicycle rack,
Figure 11 is a further side view of the bicycle rack,
Figure 12 is a further side sectional view of part of the bicycle rack connecting to a motor vehicle, and
Figure 13 is a further side sectional view of part of the bicycle rack connecting to a motor vehicle.

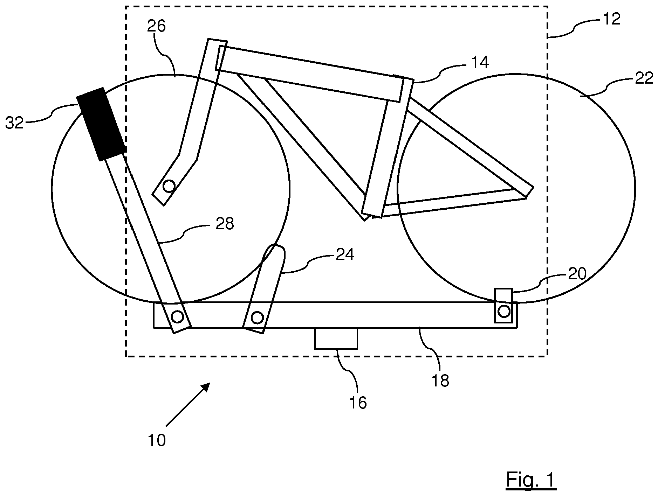

The bicycle rack 10 is shown in Figure 1 from the rear and is in the form of apparatus 10 for connecting to a motor vehicle 12 and for carrying one or more bicycles 14. The apparatus 10 comprises a central frame 16 for connecting to a motor vehicle 12, a rail 18 connected to the central frame 16 and aligned perpendicular to the central frame 16, a rear wheel connector 20 connected to the rail 18 at one end thereof and for connecting to a rear wheel 22 of a bicycle 14, a front wheel stop 24 connected to the rail 18 for bracing against a front wheel 26 of a bicycle 14, and a front wheel connector 28 rotationally connected to the rail 18 at an opposite end of the rail 18 to the rear wheel connector 20 and for connecting to a front wheel 26 of a bicycle 14.

The front wheel connector 28 mounts a front wheel clamp 32 on one end of the front wheel connector 28, where the front wheel connector 28 is rotationally connected to the respective rail 18 and 30 at the opposite end to the front wheel clamp 32. The front wheel clamp 32 comprises a hook 34 for looping over a front wheel 26 of a bicycle 14. The front wheel connector 28 is extendable in length and is lockable at a plurality of different lengths. The front wheel stop 24 is rotationally connected to the respective rail 18, 30.

The bicycle 14 is held in place at one end by the rear wheel connector 20, which is a strap. The front wheel 26 of the bicycle 14 is held from any freedom of movement by the front wheel stop 24, the contact with the rail 18 and by the front wheel connector 28 that can be varied in length and is restricted from pivoting outwards.

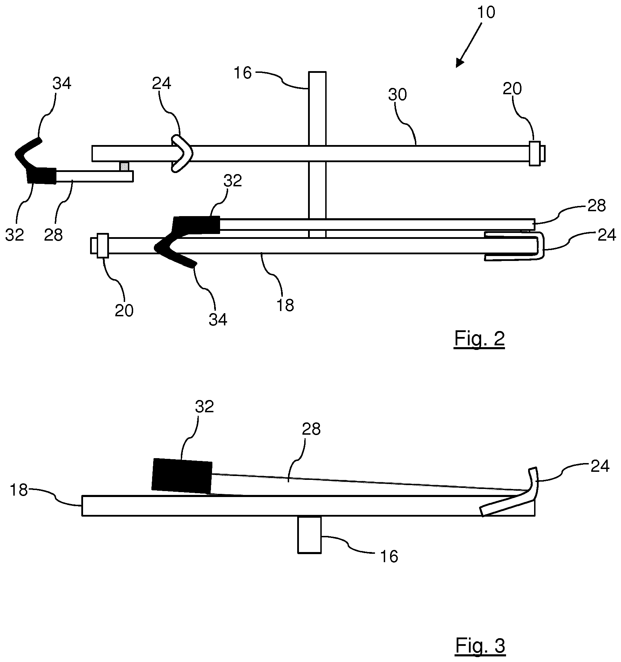

Figure 2 shows the bicycle rack 10 viewed from above. The bicycle rack 10 shown in this Figure is for carrying two bicycles 14 and is provided with a second rail 30. The second rail 30 connected to the central frame 16 and is aligned perpendicular to the central frame 16 and parallel and spaced apart from the first rail 18, and there is additionally a rear wheel connector 20 connected to the second rail 30 at one end thereof and for connecting to a rear wheel 22 of a bicycle 14, a front wheel stop 24 connected to the second rail 30 for bracing against a front wheel 26 of a bicycle 14, and a front wheel connector 28 rotationally connected to the second rail 30 at an opposite end of the second rail 30 to the rear wheel connector 20 and for connecting to a front wheel 26 of a bicycle 14.

The second rail 30 is connected to the central frame 16 in an opposite orientation to the first rail 18, such that one end of the second rail 30 is adjacent to the opposite end of the first rail 18. This arrangement results in the bicycles 14 that are carried by the bicycle rack 10 being in opposite orientation to one another, to achieve the best use of space. The two bicycles 14 would face in opposite directions, while remaining parallel to one another. The handlebars of one bicycle 14 would be adjacent to the seat of the other bicycle 14, and vice versa.

In this Figure, the inner rail 30 is shown in a condition ready to accept a bicycle 14 with the front wheel connector 28 rotated outwards and the front wheel stop 24 rotated inwards. The outer rail 18 is shown in its stored configuration, with the front wheel connector 28 and the front wheel stop 24 folded down to reduce the storage space required to store the bicycle rack 10. It is apparent that access to the vehicle's tailgate is maintained when the bicycle rack 10 is mounted on the vehicle 12, as the arms can be folded into a low and compact position.

Figure 3 shows the bicycle rack 10 from the rear in its folded configuration. It can be seen from this Figure that the bicycle rack 10, when folded, is very flat and does not take up much room in the vertical direction. The outer rail 18 is visible, mounted by the central frame 16, such that each rail 18 and 30 is connected to the central frame 16 at a central location of the respective rail 18 and 30. The front wheel connector 28 of the outer rail 18 has been folded inwards such that it is almost parallel to the rail 18 and lies flat, with the hook 34 in contact with the rail 18. In a similar fashion, the front wheel stop 24 has been folded outwards again so that it is almost parallel to the rail 18 and lies flat against the rail 18.

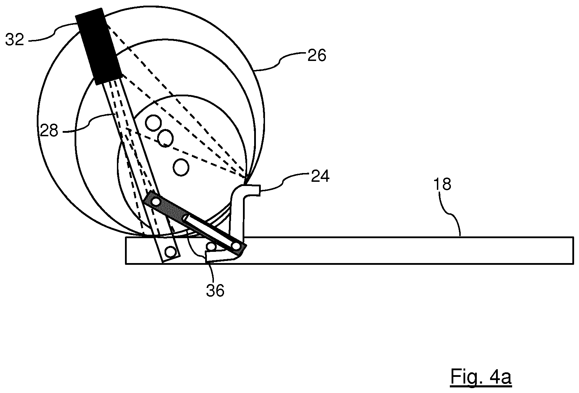

Figure 4a shows the front wheel connector 28 with three sizes of bicycle front wheel 26 held securely in place. The front wheel connector 28 is restricted from rotating further outboard by a stop 36, which connects the front wheel connector 28 to the front wheel stop 24. The front wheel stop 24 is restricted from rotating further inboard by contacting a protruding pin. It is apparent that many sizes of wheel 26 are accommodated and the long arm of the connector 28 is always forward of the axis of the front wheels 26 and in front of any mudguard and brake callipers. In order to secure the front wheel 26 it is necessary to hold the wheel 26 in three places such that a triangle is made by connecting the three points. The centre of the wheel 26 should always sit within this triangle. By fixing the front wheel stop 24 above and midpoint from the end of the rail 18 to the central frame 16, it is possible to provide two points of contact (the rail 18 and the stop 24). The third contact point at the top of the wheel 26 is defined by the front wheel clamp 32 at the top of the front wheel connector 28, which is restricted from rotating further outboard from the rail 18 and has a ratchet device which can exert pressure retaining the wheel 26 and therefore the bicycle 14. The front wheel connector 28 is pivoted from the far end of the rail 18 so that its trajectory is beyond the axis of the front wheel 26 and therefore does not need to be so far from the centreline of the wheel 26.

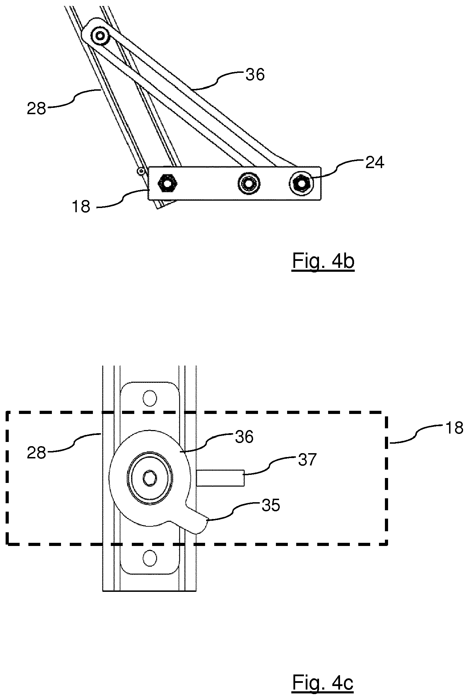

Figure 4b shows more detail of the stop 36. In this first embodiment, the stop 36 comprises an elongate bar 36 which is connected at one end to the front wheel connector 28 and is connected at the opposite end to the front wheel stop 24. In this preferred arrangement, the elongate bar 36 is connected to the turning point of the front wheel stop. The elongate bar 36 is provided with an open slot in the middle and the connection to the front wheel connector 28 is via a wheel that locates in the slot. The purpose of the elongate bar 36 is to prevent rotation of the front wheel connector 28 beyond a specific point. In this Figure, the front wheel connector 28 is shown in its maximum rotational position, it cannot rotate any further anti-clockwise from the position shown in this Figure.

Figure 4c shows a second embodiment of the stop 36. Here the stop 36 is a component 36 connected to the front wheel connector 28 and comprising an outwardly extending finger 35 which engages with an element 37 mounted on the rail. In this Figure, as the front wheel connector 28 rotates anti-clockwise, then the finger 35 will engage with the element 37 and no further rotation of the front wheel connector 28 will be possible.

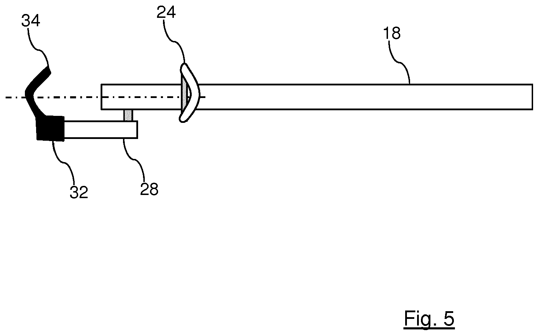

Figure 5 illustrates the front wheel connector 28 from above which is shown as close to the centre line of a wheel 26 of a bicycle 14 such that moment forces are low and mass can be minimised.

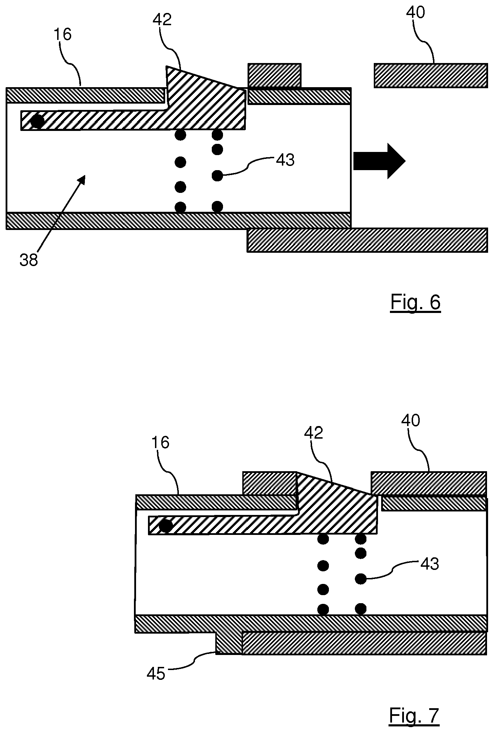

As shown in Figures 6 and 7, in order to connect the bicycle rack 10 to the vehicle 12, the central frame 16 includes a latching mechanism 38 at one end thereof, the latching mechanism 38 for locking the central frame 16 to a receiver 40 of the vehicle 12. At least part of the latching mechanism 38 is located internally within the central frame 16 and includes a moveable latch 42 that is biased to move and extend out of the central frame 16. Figure 6 shows the internal automatic latching system 38 such that the latch 42 is biased to be sprung outboard, but during loading of the accessory the spring 43 is compressed and the latch 42 rotates downwards. Figure 7 shows the bicycle rack 10 latched into position such that removal of the rack 10 is blocked by the engagement of the latch 42 into a hole on the receiver 40. To remove the bicycle rack 10 a handle on the side of the frame 16 acting at the hinge point allows rotation of the latch 42 to compress the spring 43. It should be noted that a stop 45 is required to avoid the bicycle rack 10 moving further into the receiver 40 and unlatching.

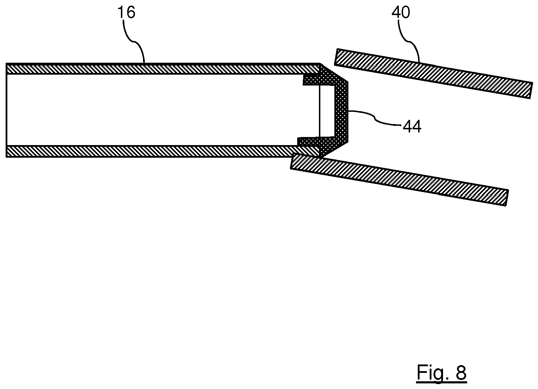

Figure 8 shows a further side view of the receiver 40. There is a small ledge protruding from the bottom lip of the receiver 40. This ledge provides a useful resting place for the bicycle rack 10 such that the fitting effort is reduced and the bicycle rack 10 can be more easily aligned to the receiver 40. Further the most significant loads are the vertical bending on the receiver 40 and the additional overhang at the bottom is advantageous in carrying these loads efficiently.

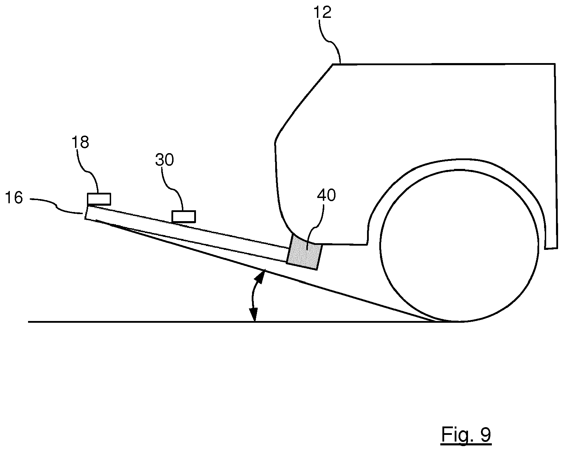

Figure 9 shows the side view of a vehicle 12 with the bicycle rack 10 attached. The receiver 40 is located at an angle to the horizontal, such that the central frame 16 extends upwards and away from the vehicle 12 mounting the receiver 40. By setting the receiver 40 at an angle similar to the departure angle it is possible to maintain a good departure angle for the vehicle 12 without bending the frame of the bicycle rack 10. A departure angle for the vehicle 12 should be 11 to 16 degrees as measured from the rear tyre. Further advantageously the bicycle rack 10 is basically flat in design aiding storage space. By setting the angle of the receiver 40, it is possible to maintain a simple structure and flat rack even if bicycle rack 10 is extended further, such as a three, four or five bicycle rack.

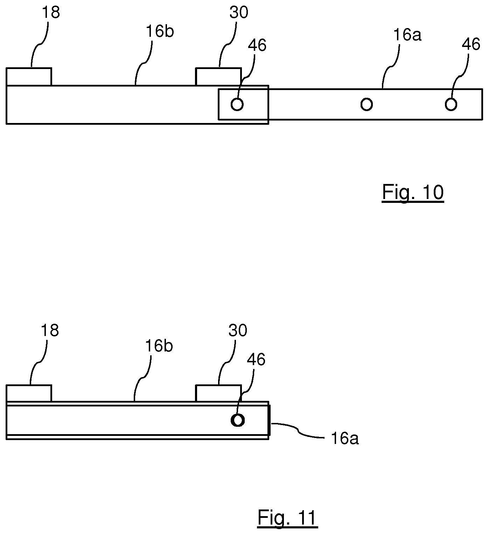

The central frame 16, in a preferred embodiment, comprises two frame components 16a and 16b connected together at respective ends thereof, where the first frame component 16a can be located internally within the second frame component 16b when the two frame components 16a and 16b are disconnected from each other. Figure 10 shows a side elevation of the bicycle rack 10 in this form. It is advantageous if the packaging requirement of the bicycle rack 10 is small when not in use. By providing a hole 46 in the second frame component 16b that is matched with a fixing hole 46 for the receiver 40 it is possible to secure the first frame component 16a to the second frame component 16b when storing. Figure 11 shows that the first frame component 16a can slide into the second frame component 16b and the total package size is significantly diminished. Further intermediate positions may be useful for those wishing to store an accessory on the vehicle 12, or for carrying a reduced number of bicycles 14, but without the significant overhang.

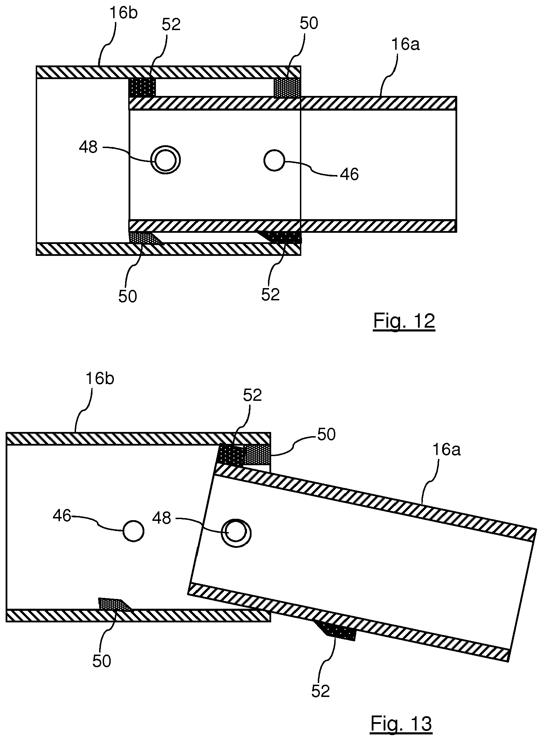

Each frame component 16a and 16b can be provided with two pairs of lateral holes 46 therethrough and the bicycle rack 10 further comprises a locking pin 48 for connecting together the two frame components 16a and 16b through one pair of lateral holes 46 in each frame component 16a and 16b. The frame components 16a and 16b can be further provided with one or more lugs 50 and 52, the lugs 50 located internally within the second frame component 16b and the lugs 52 located externally on the first frame component 16a. This is shown in detail in Figures 12 and 13.

Figure 12 shows a side view detail of the joint between first and second frame components 16a and 16b. If the frame components 16a and 16b are unattached at the holes 46 then the frame components 16a and 16b can also be moved apart for the purposes of tilting the accessory away from the vehicle 12 as would be useful for access to the tailgate when bicycles 14 are already loaded. Figure 13 shows that the frame components 16a and 16b are restricted from being removed completely as the top bearing lug 52 of the first frame component 16a contacts the top bearing lug 50 of the second frame component 16b. However, due to the disengagement of lower bearing the first and second frame components 16a and 16b are free to rotate about an axis perpendicular to this view. Reinsertion is achieved with ramps on lower bearing lugs 50 and 52 to aid process and refitting of a pin 48 to secure for travel. A second pin hole may be provided with automatic plunging pin fitted to the second frame component 16b such that, in the case of driving off with the bicycle rack 10 left in a tilted condition, there is a secondary attachment which can secure the bicycle rack 10 to the vehicle 12 in the likelihood that the bearings will detach and the frame components 16a and 16b freely rotate relative to each other and the bicycle rack 10 contacts the road.

## Claims

1. Apparatus (10) for connecting to a motor vehicle (12) and for carrying one or more bicycles (14), the apparatus (10) comprising:
• a central frame (16) for connecting to a motor vehicle (12),
• a rail (18) connected to the central frame (16) and aligned perpendicular to the central frame (16),
• a rear wheel connector (20) connected to the rail (18) at one end thereof and for connecting to a rear wheel (22) of a bicycle (14),
• a front wheel stop (24) connected to the rail (18) for bracing against a front wheel (26) of a bicycle (14), and
• a front wheel connector (28) rotationally connected to the rail (18) at an opposite end of the rail (18) to the rear wheel connector (20) and for connecting to a front wheel (26) of a bicycle (14),
• **characterised in that** the apparatus (10) further comprises a stop (36) connected to the front wheel connector (28) and for preventing rotation of the front wheel connector (28) beyond a specific point, so that when the front wheel connector (28) is forward of the axis of a front wheel (26) of a bicycle (14), the front wheel connector (28) is restricted from rotating further outboard by the stop (36).

2. Apparatus according to claim 1, wherein the stop (36) comprises an elongate bar (36) which is connected at one end to the front wheel connector (28) and is connected at the opposite end to the front wheel stop (24).

3. Apparatus according to claim 1, wherein the stop (36) comprises a component (36) connected to the front wheel connector (28) and comprising an outwardly extending finger (35) which engages with an element (37) mounted on the rail (18).

4. Apparatus according to claim 1, 2 or 3, wherein the front wheel connector (28) mounts a front wheel clamp (32) on one end of the front wheel connector (28), the front wheel connector (28) rotationally connected to the respective rail (18, 30) at the opposite end to the front wheel clamp (32).

5. Apparatus according to claim 4, wherein the front wheel clamp (32) comprises a hook (34) for looping over a front wheel (26) of a bicycle (14).

6. Apparatus according to claim 4 or 5, wherein the front wheel connector (28) and the front wheel clamp (32) are extendable in length and lockable at a plurality of different lengths.

7. Apparatus according to any preceding claim, wherein the front wheel stop (24) is rotationally connected to the respective rail (18, 30).

8. Apparatus according to any preceding claim, wherein the rail (18) is connected to the central frame (16) at a central location of the rail (18).

9. Apparatus according to any preceding claim, wherein the central frame (16) includes a latching mechanism (38) at one end thereof, the latching mechanism (38) for locking the central frame (16) to a receiver (40) of a vehicle (12).

10. Apparatus according to claim 9, wherein at least part of the latching mechanism (38) is located internally within the central frame (16) and includes a moveable latch (42) that is biased to move and extend out of the central frame (16).

11. Apparatus according to claim 9 or 10, wherein the receiver (40) is located at an angle to the horizontal, such that the central frame (16) extends upwards and away from the vehicle (12) mounting the receiver (40).

12. Apparatus according to any preceding claim, wherein the central frame (16) comprises a chamfered plug (44) closing one end thereof.

13. Apparatus according to any preceding claim, wherein the central frame (16) comprises two frame components (16a, 16b) connected together at respective ends thereof, wherein a first frame component (16a) can be located internally within a second frame component (16b) when the two frame components (16a, 16b) are disconnected from each other.

14. Apparatus according to claim 13, wherein each frame component (16a, 16b) is provided with two pairs of lateral holes (46) therethrough and the apparatus (10) further comprises a locking pin (48) for connecting together the two frame components (16a, 16b) through one pair of lateral holes (46) in each frame component (16a, 16b).

15. Apparatus according to claim 13 or 14, and further comprising one or more lugs (50) located internally within the second frame component (16b) and one or more lugs (52) located externally on the first frame component (16a).

## Patentansprüche

1. Vorrichtung (10) zur Anbringung an einem Kraftfahrzeug (12) und zum Tragen eines oder mehrerer Fahrräder (14), die Vorrichtung (10) umfassend:
• einen Mittelrahmen (16) zur Anbringung an einem Kraftfahrzeug (12),
• eine Schiene (18), die mit dem Mittelrahmen (16) verbunden ist und senkrecht zu dem Mittelrahmen (16) ausgerichtet ist,
• einen Hinterradverbinder (20), der mit der Schiene (18) an einem Ende davon verbunden ist und zur Anbringung an einem Hinterrad (22) eines Fahrrads (14) dient,
• einen mit der Schiene (18) verbundenen Vorderradanschlag (24) zur Verankerung an einem Vorderrad (26) eines Fahrrads (14), und
• einen Vorderradverbinder (28), der mit der Schiene (18) an einem zum Hinterradverbinder (20) entgegengesetzten Ende der Schiene (18) drehbar verbunden ist und zur Anbringung an einem Vorderrad (26) eines Fahrrads (14) dient,
• **dadurch gekennzeichnet, dass** die Vorrichtung (10) ferner einen Anschlag (36) umfasst, der mit dem Vorderradverbinder (28) verbunden ist und dazu dient, eine Drehung des Vorderradverbinders (28) über einen bestimmten Punkt hinaus zu verhindern, sodass, wenn sich der Vorderradverbinder (28) vor der Achse eines Vorderrades (26) eines Fahrrads (14) befindet, der Vorderradverbinder (28) durch den Anschlag (36) daran gehindert wird, sich weiter nach außen zu drehen.

2. Vorrichtung nach Anspruch 1, wobei der Anschlag (36) eine längliche Stange (36) umfasst, die an einem Ende mit dem Vorderradverbinder (28) verbunden ist und am entgegengesetzten Ende mit dem Vorderradanschlag (24) verbunden ist.

3. Vorrichtung nach Anspruch 1, wobei der Anschlag (36) ein Bauelement (36) umfasst, das mit dem Vorderradverbinder (28) verbunden ist und einen sich nach außen erstreckenden Zinken (35) umfasst, der in ein an der Schiene (18) befestigtes Element (37) eingreift.

4. Vorrichtung nach Anspruch 1, 2 oder 3, wobei der Vorderradverbinder (28) eine Vorderradklemme (32) an einem Ende des Vorderradverbinders (28) befestigt, wobei der Vorderradverbinder (28) mit der jeweiligen Schiene (18, 30) am entgegengesetzten Ende zu der Vorderradklemme (32) drehbar verbunden ist.

5. Vorrichtung nach Anspruch 4, wobei die Vorderradklemme (32) einen Haken (34) zum Umlegen um ein Vorderrad (26) eines Fahrrads (14) umfasst.

6. Vorrichtung nach Anspruch 4 oder 5, wobei der Vorderradverbinder (28) und die Vorderradklemme (32) verlängerbar und in mehreren unterschiedlichen Längen arretierbar sind.

7. Vorrichtung nach einem der vorhergehenden Ansprüche, wobei der Vorderradanschlag (24) mit der jeweiligen Schiene (18, 30) drehbar verbunden ist.

8. Vorrichtung nach einem der vorhergehenden Ansprüche, wobei die Schiene (18) mit dem Mittelrahmen (16) an einer zentralen Stelle der Schiene (18) verbunden ist.

9. Vorrichtung nach einem der vorhergehenden Ansprüche, wobei der Mittelrahmen (16) einen Verriegelungsmechanismus (38) an einem Ende davon aufweist, wobei der Verriegelungsmechanismus (38) zur Verriegelung des Mittelrahmens (16) an einer Aufnahmeeinrichtung (40) eines Fahrzeugs (12) dient.

10. Vorrichtung nach Anspruch 9, wobei zumindest ein Teil des Verriegelungsmechanismus (38) innerhalb des Mittelrahmens (16) angeordnet ist und eine bewegliche Verriegelung (42) aufweist, die so vorgespannt ist, dass sie sich aus dem Mittelrahmen (16) herausbewegt und sich aus diesem erstreckt.

11. Vorrichtung nach Anspruch 9 oder 10, wobei die Aufnahmeeinrichtung (40) in einem Winkel zur Horizontalen angeordnet ist, sodass sich der Mittelrahmen (16) nach oben und weg von dem Fahrzeug (12), an dem die Aufnahmeeinrichtung (40) befestigt ist, erstreckt.

12. Vorrichtung nach einem der vorhergehenden Ansprüche, wobei der Mittelrahmen (16) einen abgeschrägten Steckverbinder (44) umfasst, der ein Ende davon verschließt.

13. Vorrichtung nach einem der vorhergehenden Ansprüche, wobei der Mittelrahmen (16) zwei Rahmenbauelemente (16a, 16b) umfasst, die an jeweiligen Enden davon miteinander verbunden sind, wobei ein erstes Rahmenbauelement (16a) innerhalb eines zweiten Rahmenbauelements (16b) angeordnet sein kann, wenn die zwei Rahmenbauelemente (16a, 16b) voneinander getrennt sind.

14. Vorrichtung nach Anspruch 13, wobei jedes Rahmenbauelement (16a, 16b) mit zwei Paaren seitlicher Löcher (46) durch dieses hindurch bereitgestellt ist und die Vorrichtung (10) ferner einen Sicherungsstift (48) zum Verbinden der beiden Rahmenbauelemente (16a, 16b) miteinander über ein Paar von seitlichen Löchern (46) in jedem Rahmenbauelement (16a, 16b) umfasst.

15. Vorrichtung nach Anspruch 13 oder 14, und ferner umfassend einen oder mehrere Ansätze (50), die innen in dem zweiten Rahmenbauelement (16b) angeordnet sind, und einen oder mehrere Ansätze (52), die außen an dem ersten Rahmenbauelement (16a) angeordnet sind.

## Revendications

1. Appareil (10) destiné au raccordement à un véhicule motorisé (12) et destiné au transport d'au moins une bicyclette (14), l'appareil (10) comprenant :
• un cadre central (16) permettant le raccordement à un véhicule motorisé (12),
• un rail (18) relié au cadre central (16) et aligné perpendiculairement par rapport au cadre central (16),
• un raccord de roue arrière (20) relié au rail (18) au niveau d'une extrémité de celui-ci et permettant le raccordement à une roue arrière (22) d'une bicyclette (14),
• une butée de roue avant (24) reliée au rail (18) permettant de prendre appui contre une roue avant (26) d'une bicyclette (14), et
• un raccord de roue avant (28) relié de manière rotative au rail (18) au niveau d'une extrémité opposée du rail (18) sur le raccord de roue arrière (20) et permettant le raccordement à une roue avant (26) d'une bicyclette (14),
• **caractérisé en ce que** l'appareil (10) comprend en outre une butée (36) reliée au raccord de roue avant (28) et permettant d'empêcher la rotation du raccord de roue avant (28) au-delà d'un point spécifique, de sorte que lorsque le raccord de roue avant (28) est situé à l'avant de l'axe d'une roue avant (26) d'une bicyclette (14), le raccord de roue avant (28) est restreint en matière de rotation supplémentaire vers l'extérieur au moyen de la butée (36).

2. Appareil selon la revendication 1, dans lequel la butée (36) comprend une barre allongée (36) qui est reliée au niveau d'une extrémité par rapport au raccord de roue avant (28) et est reliée au niveau de l'extrémité opposée par rapport à la butée de roue avant (24).

3. Appareil selon la revendication 1, dans lequel la butée (36) comprend un composant (36) relié au raccord de roue avant (28) et comprenant un doigt s'étendant vers l'extérieur (35) qui vient en prise avec un élément (37) monté sur le rail (18).

4. Appareil selon la revendication 1, 2 ou 3, dans lequel le raccord de roue avant (28) mounte une pince de roue avant (32) sur une extrémité du raccord de roue avant (28), le raccord de roue avant (28) étant reliée de manière rotative au rail respectif (18, 30) au niveau de l'extrémité opposée par rapport à la pince de roue avant (32).

5. Appareil selon la revendication 4, dans lequel la pince de roue avant (32) comprend un crochet (34) permettant de réaliser une boucle sur une roue avant (26) d'une bicyclette (14).

6. Appareil selon la revendication 4 ou 5, dans lequel le raccord de roue avant (28) et la pince de roue avant (32) s'étendent dans la longueur et sont verrouillables à une pluralité de longueurs différentes.

7. Appareil selon l'une quelconque des revendications précédentes, dans lequel la butée de roue avant (24) est reliée de manière rotative au rail respectif (18, 30).

8. Appareil selon l'une quelconque des revendications précédentes, dans lequel le rail (18) est relié au cadre central (16) au niveau d'un emplacement central du rail (18).

9. Appareil selon l'une quelconque des revendications précédentes, dans lequel le cadre central (16) comprend un mécanisme de loquet (38) au niveau d'une extrémité de celui-ci, le mécanisme de loquet (38) permettant de verrouiller le cadre central (16) sur un récepteur (40) d'un véhicule (12).

10. Appareil selon la revendication 9, dans lequel au moins une partie du mécanisme de loquet (38) est située à l'intérieur du cadre central (16) et inclut un loquet amovible (42) qui est sollicité pour se déplacer et s'étendre en dehors du cadre central (16).

11. Appareil selon la revendication 9 ou 10, dans lequel le récepteur (40) est situé à un certain angle par rapport à l'horizontale, de sorte que le cadre central (16) s'étende vers le haut et depuis le véhicule (12) montant le récepteur (40).

12. Appareil selon l'une quelconque des revendications précédentes, dans lequel le cadre central (16) comprend une fiche chanfreinée (44) permettant de fermer une extrémité de celle-ci.

13. Appareil selon l'une quelconque des revendications précédentes, dans lequel le cadre central (16) comprend deux composants de cadre (16a, 16b) reliés ensemble à des extrémités respectives de celui-ci, dans lequel un premier composant de cadre (16a) peut être situé à l'intérieur d'un second composant de cadre (16b) lorsque les deux composants de cadre (16a, 16b) sont déconnectés l'un de l'autre.

14. Appareil selon la revendication 13, dans lequel chaque composant de cadre (16a, 16b) est pourvu de deux paires de trous latéraux (46) à travers ceux-ci et l'appareil (10) comprend en outre une broche de verrouillage (48) permettant de raccorder ensemble les deux composants de cadre (16a, 16b) grâce à une paire de trous latéraux (46) situés dans chaque composant de cadre (16a, 16b).

15. Appareil selon la revendication 13 ou 14, et comprenant en outre au moins une oreille (50) située à l'intérieur du second composant de cadre (16b) et au moins une oreille (52) située à l'extérieur du premier composant de cadre (16a).
